# EUROPEAN PATENT SPECIFICATION

(11) **EP 0 981 738 B1**
(45) Date of publication and mention of the grant of the patent: **19.02.2003**
(21) Application number: 98917493.3
(22) Date of filing: 11.05.1998
(51) Int. Cl.: G01N 27/00

(54) **PROCESS AND DEVICE FOR THE DETECTION AND THE QUANTITATIVE ANALYSIS OF VOLATILE SUBSTANCES**
VERFAHREN UND VORRICHTUNG ZUR FESTSTELLUNG UND ZUR QUANTITATIVEN ANALYSE VON FLÜCHTIGEN STOFFEN
PROCEDE ET DISPOSITIF POUR LA DETECTION ET L'ANALYSE QUANTITATIVE DE SUBSTANCES VOLATILES

(30) Priority: 13.05.1997 CH 111897
(43) Date of publication of application: 01.03.2000
(73) Proprietor: CAL-X Investment S.A, 1207 Geneva (CH)
(72) Inventor: LAMARTINE, Roger, F-69100 Villeurbanne (FR); COLEMAN, Anthony, F-69300 Caluire (FR); GORELOFF, Philippe, F-01700 Saint Maurice de Beynost (FR); CHOQUARD, Philippe, CH-1223 Cologny (CH); MARCILLAC, Arnold, F-01150 Saint Sorlin en Bugey (FR); MARTELIN, Yvon, F-01700 Saint Maurice de Beynost (FR)
(74) Representative: Mohnhaupt, Dietrich
(86) International application number: IB9800696
(87) International publication number: WO98052028

(56) References cited:
- US-A- 4 317 995
- DICKERT F L ET AL: "MASS-SENSITIVE SOLVENT VAPOR DETECTION WITH CALIX 4RESORCINARENES:TUNING SENSITIVITY AND PREDICTING SENSOR EFFECTS" ANALYTICAL CHEMISTRY, vol. 69, no. 6, 15 March 1997, pages 1001-1005, XP000686379
- F. L. DICKERT: "SUPRAMOLECULAR DETECTION OF SOLVENT VAPOURS WITH CALIXARENES: MASS-SENSITIVE SENSORS, MOLECULAR MECHANICS AND BET STUDIES" MIKROCHIM. ACTA, vol. 119, no. 1-2, 1995, AT, pages 55-62, XP002071274
- M. MCCARRICK: "ASSESSMENT OF A CHROMOGENIC CALIX(4)ARENE FOR THE RAPID COLORIMETRIC DETECTION OF TRIMETHYLAMINE" J. MATER. CHEM., vol. 4, no. 2, 1994, pages 217-221, XP002071275
- J. AUGE: "VERSTILE MICROCONTROLLED GAS SENSOR ARRAY SYSTEM USING THE QUARTZ MICROBALANCE PRINCIPLE AND PATTERN RECOGNITION METHODS" SENS. AND ACTUATORS, B, vol. B26, no. 1-3, 1995, pages 181-186, XP000508680
- J. HARTMANN: "SUPRAMOLECULAR INTERACTIONS ON MASS SENSITIVE SENSORS IN GAS PHASES AND LIQUIDS" SENS. AND ACTUATORS, B, vol. B34, no. 1-3, 1996, pages 305-311, XP004077996

## Description

### BACKGROUND OF THE INVENTION

### 1. Field of the invention

The present invention belongs to the field of quantitative analysis, and it refers more particularly to a process and a device for the detection and the quantitative analysis in the nanogram region, of light compounds having generally but not exclusively an ionisable character and which are present in low concentrations in a gaseous environment, typically in ambient air.

The present invention finds an interesting application in the detection and quantitative analysis of trace amounts of volatile light components, contained in ambient air and having generally an ionisable character. These compounds are generally known under the abbreviated denomination of VLC, namely volatile low molecular compounds, and some of them are organic compounds. The most important VLC are ammonia, lower aliphatic amines, hydrogen sulphide, mercaptans and disulphides. Regarding the description of VLC and a process for purifying air containing same, see, for example, the document WO 97/31698 whose content is herewith incorporated by reference.

Nowadays, it is strongly required to detect and quantitatively analyse these compounds and still others in ambient air due to the evolution of environmental air pollution caused by the human society. The absolute amounts of these compounds and their concentration in ambient air are generally low but their detection is nevertheless necessary, even in the range of some micrograms per cube meter.

The detection of a low amount of a chemical substance and the evolution of its amount or its concentration in a gaseous medium such as ambient air as well, can be effected in principle by using very sensitive analysis instruments such as spectrometers or with the help of pick-up or sensor devices associated with data processing installations. The known analysis apparatuses and installations are generally complicated, bulky, expensive and difficult to be used. For these reasons, these installations can furthermore not be used in the great majority of cases for field analyses.

### 2. Description of the Prior Art

Sensors for the detection and quantitative analysis of chemical compound molecules have in principle already become known, see, for example, Anal.Chem. **69**, 1000-1005 (1997). These sensors are generally constituted by two distinct parts, namely a reactive portion which is sensitive to the molecules to be determined, called in the following "thin layer", and a transducer and carrier system, called in the following "support", for transforming the interaction between the reactive portion and the said molecules into an electric signal capable of being processed further. The reactive portion may be constituted by a thin and immobile layer of a chemical substance, capable of capturing the molecules to be detected, be it by simple adsorption, by complexation, by a stoichiometric chemical reaction or by any other phenomenon capable of changing the physical and/or chemical properties of the thin layer. The transducer serves simultaneously as a carrier support for the thin layer and as an electric, optical, magnetic or other signal generator of a differential signal with respect to the signal generated by the thin layer when it is uncharged or only partially charged by the molecules to be detected. The above publication only discloses calix[4]resorcinarenes as mass sensitive solvent vapour detectors. Analoguous detectors for solvent vapours such as toluene, using tert-butylcalix[4]arene and tert-butylcalix-[6] arene, are disclosed in Mikrochim. Acta **119**, 55-62 (1995). Furthermore, the principle of such sensors can be found in K.-D. Schierbaum et al., Fresenius J. Anal. Chem., **349**, 372-379 (1994).

U.S. patent specification No. 4,317,995 discloses a trace vapour detector system comprising a closed gas flow circuit into which vapour traces can be introduced. The determination of these vapours is carried out by an ionisation chamber. The document does not refer to the sensors discussed above.

### SUMMARY OF THE INVENTION

The known methods and devices for detecting and quantitatively analysing very low concentrations of volatile low molecular compounds suffer from a number of disadvantages. For example, the sensors are difficult to prepare (until now, high vacuum techniques must be used); they are not selective enough, their sensitivity and the reproducibility of the results are by far insufficient, etc. Known automatic devices for detecting, analysing and monitoring small amounts of low. volatile molecular compounds are rather bulky and difficult to use.

The first and major object of the present invention is to overcome the disadvantages discussed above and to provide a process for the detection and the quantitative analysis, in the nanogram range, of volatile low molecular compounds which are present in low concentration in a gaseous environment, typically in the ambient atmosphere. Another object of the present invention is to provide an installation for implementing the process of the invention.

These objects are fulfilled by the process and the installation according to the invention. The process for the detection and the quantitative analysis of volatile low molecular compounds, contained in low concentration in a gaseous medium, wherein a sensor is used comprising a sensitive thin layer containing at least one calixarene, disposed on a support capable of generating a signal in response to the nature and/or the amount of said volatile low molecular compound adsorbed by said thin layer, and the generated signal is processed in order to determine the nature and/or the amount of said adsorbed compound, is characterised in that said sensor is contacted with a continous stream of said gaseous medium, and that said sensitive thin layer of the sensor has been heat treated just after the preparation of the sensor in order to confer to this layer a distinct and well defined form of crystalline organisation.

After this measurement process, the thin layer on the sensor may be regenerated to be ready for the next analysis. However, it is also contemplated in the invention to change or to replace the sensor.

The installation of the invention, comprising a closed tubular circuit containing a volumetric pump, at least one sensor for the volatile low molecular compound(s), a feeding device for the gaseous medium to be analysed, and means for controlling, adjusting and for processing the data supplied by said sensor, is characterised in that the said sensor comprises a sensitive thin layer containing at least one calixarene, disposed on a support capable of generating a signal in response to the nature and/or the amount of said volatile low molecular compound adsorbed by said thin layer, said sensor having been heat treated just after its preparation in order to uniform the crystal morphology of said calixarene in the thin layer.

The support of the sensor which is used may for example be a field effect transistor (FET), an optical fibre, or a piezoelectric device; the latter is already known per se and is presently preferred. However, these examples are not limiting; any support whatsoever that is capable of providing a signal in response of a changing physical or chemical condition can be used, for example sensors or pick-ups for temperature, force, electric frequency, magnetic conditions, humidity, pressure, capacity, etc. These sensors are coated with a thin layer of one or more calixarenes in order to render them sensitive to the volatile lightweight compounds.

Examples for volatile low molecular compounds that can be de-termined and analysed in the present process and installation are ammonia, lower alkyl amines and lower alkenyl amines such as methylamine, dimethylamine, trimethylamine, monoethylamine, diethylamine, triethylamine, ethylendiamine, propenylamine and others; alcohols such as methanol and ethanol; ketones such as dimethylketone, diethylketone and methyl ethyl ketone; aldehydes such as formaldehyde and acetaldehyde; hydrogen sulphide, hydrogen disulphide, methylmercaptan and other lower alkyl and lower alkenyl mercaptans, methane, ethane, propane, butane, etc.; chlorinated, brominated, fluorinated and iodinated alkanes and alkylenes; phosphine, stibine, hydrogen chloride, hydrogen bromide, hydrogen iodide, hydrogen fluoride; arsine, hydrogen selenide; hydroxylamine, hydrazine; silane and higher silanes; tin hydride, etc. This list is not exhaustive.

The attached drawing is to better explain particular or preferred embodiments of the present invention.

### BRIEF DESCRIPTION OF THE DRAWING

In the drawing:
- FIG. 1: schematically shows an installation used for the evaluation of sensors,
- FIG. 2: shows a diagram of an analysis installation according to the invention,
- FIG. 3: shows as an example the adsorption curve of diethylamine on a sensor bearing a 25 nm thick layer of p-*tert*-butylcalix[4]arene according to Table I below, and
- FIG. 4: shows two X-ray diffraction spectra of p-*tert*-butylcalix[4]arene having two different crystalline states corresponding to different accessible morphologies of the thin layer.

### DETAILED DESCRIPTION OF THE INVENTION

The sensor used in the process and the installation of the invention is preferably a sensor bearing a thin layer of one or more calixarenes on a quartz crystal as a support. Such sensors are in principle already known, see the K.-D. Schierbaum et al. article cited above. According to this publication, a quartz oscillator, polished and equipped with gold electrodes, is coated with a thin layer of a calixarene in a thermal evaporation process under a very high vacuum. The quartz crystal which was used had an oscillation frequency of about 10 MHz. When the calixarene layer adsorbs perchloroethylene (C₂Cl₄) molecules or another organic substance, the above oscillation frequency undergoes a change that increases with the number of adsorbed perchloroethylene molecules, and this change can be measured and related to the amount of adsorbed molecules. The published experiments have been carried out in an evacuated vessel, and the pressure of organic compounds to be adsorbed is recorded to be 200 Pa (1.5 mm Hg) at a maximum. The publication neither describes nor suggests analyses at normal atmospheric conditions, adsorption from a gas stream, and does not mention the presence of volatile, low molecular organic or inorganic compounds to be adsorbed that have an ionisable character.

According to the present invention, the following considerations have been made. When a quantitative analysis is to be made from a highly diluted system, such as only some nanograms of a VLC contained in one litre of air, with the use of a sensor as described hereinafter, it will first be necessary to contact the sensor with a certain, predetermined and measured volume of that air. During this contact procedure, the above mentioned change of the oscillation frequency will be determined continuously or during short intervals. After a predetermined time duration, it will be necessary to prepare the sensor for the next analysis series, and to this end, it is required to desorb virtually the totality of the adsorbed molecules from the sensor. However, the applicants have shown in their previously cited patent application (WO 97/31698) that the volatile low molecular compounds, especially when they have an ionisable nature, are adsorbed by calixarenes in a strong and permanent manner since there occurs the formation of ionic bonds in the interior of the calixarene molecules. The one skilled in the art was therefore led to believe that the known calixarenic sensors which work in high vacuum environments could certainly not be used in a reversible adsorption and desorption as it is one of the basic findings of the present invention. Actually, the prior art did not disclose nor suggest or anticipate the behaviour of the calixarenic sensors in free air at normal temperature and pressure, containing extremely small amounts of VLC.

Therefore, it has been found with great surprise that the above mentioned sensors not only work in a satisfactory manner in a gaseous environment of atmospheric pressure and room temperature but also are capable of being reactivated or "recycled" by a current of purified gas. Of course, the speed of reactivation can be increased when a vacuum and/or elevated temperatures are applied; in this case also, it has surprisingly be found that a very high vacuum is not necessary for a rapid reactivation of the sensor but that the vacuum of a water jet glass filter pump supplying a vacuum in the range of 4,000 to 2,000 Pa (30 to 15 mm Hg) is fully sufficient for a virtually complete desorption when it is applied for a time period of about 2 minutes only. These facts are extremely important for the practical application of the present process.

One could perhaps believe that the calixarenes when they are used as a constituting element of a sensor will behave in a different manner, regarding the power of adsorption, compared with their use as a permanent capturing agent for VLC, due to the very different thickness of the adsorbing layers in these two cases. In fact, the thickness of the calixarene layer used in the present sensors varies in principle between 20 and 500 nm, preferably between 25 and 150 nm, which means about 38 to 225 molecular layers; some sensors can be prepared where the sensitive stratum is constituted by only 9 molecular layers. In contrast thereto, the thickness of the layers used for the permanent capturing of volatile low molecular compounds is a tenth of a millimetre at a maximum. Such layers are thus at least a thousand times thicker that the previously mentioned ones. However, this is at present only an attempt of explaining this different behaviour of the calixarenes and could not be verified.

The response of the sensor strongly depends on the thickness of the applied calixarene layer. According to an important development of the invention, the thickness of this layer is adapted to the expected concentration of the volatile low molecular compound to be determined. Furthermore, it has been found that the selection of a certain thickness results in an adsorption curve (adsorbed amount versus contact time) having a more or less inclined slope.

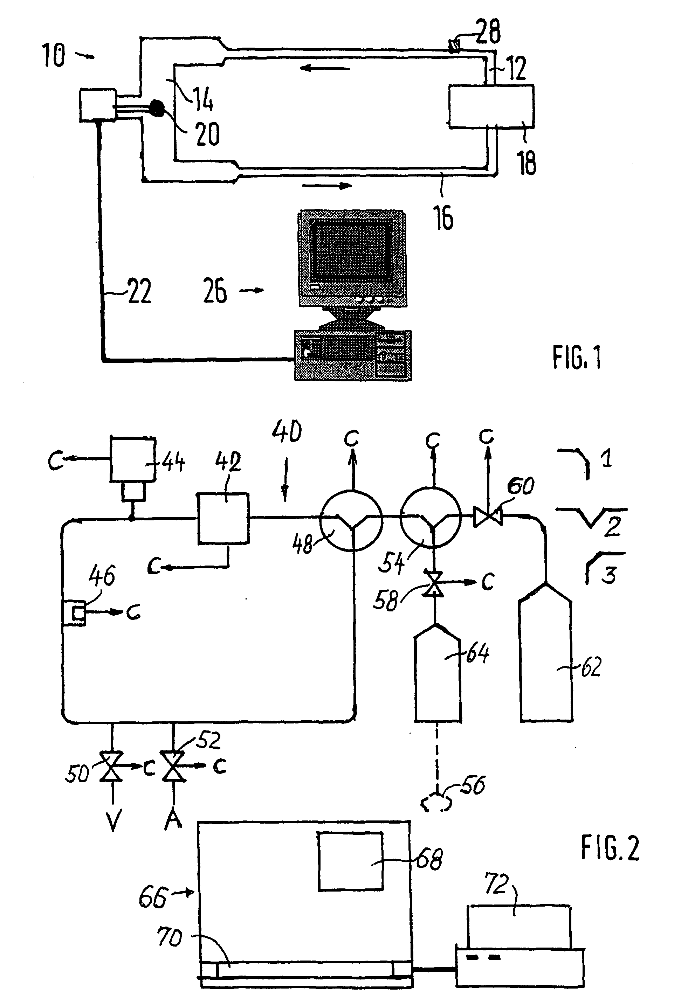

FIG. 1 shows the schema of an installation for the detection, adsorption, measurement and desorption of volatile low molecular compound from a gaseous medium. This installation is used for the evaluation of the present sensors, and its principle can be used as a model for the construction of the installation according to the present invention.

FIG. 1 shows a closed circuit 10 in which a gas is circulated, typically air at normal temperature and pressure. This circuit 10 is composed by three tubular sections 12, 14 and 16; a continuous gas stream is established and maintained by a pump 18, for example a peristaltic pump, whose delivery rate is known and adjustable. A sensor 20 is mounted within the tubular section 14, in this example a quartz crystal coated by a very thin layer of a calixarene as will be described later on. The sensor 20 is connected by an electric cable 22 to a station 26 for receiving, analysing and processing the signals coming from the sensor 20, for example a computer being equipped with appropriate software and connected to a printer and other peripherals if necessary (not shown).

An injection port 28, for example a silicone rubber membrane, is provided in the tubular section 12. A volatile low molecular compound may be injected into the system at this location.

For carrying out a test, the station 26 is powered, and the pump 18 is started. When the gas flow is equilibrated, typically after 2 or 3 minutes, a measured amount of the compound to be detected is injected via the injection port 28. It is possible to make one or several different or identical injections. The sensor 20 will adsorb the volatile low molecular compound injected into the circuit 10, and an adsorption curve is established by the system 28 and can then be evaluated.

When this test installation according to FIG. 1 is to be used in practice, the circuit 10 is preferably further equipped for the reactivation of the sensor with a feed tube for the introduction of highly purified air or another pure gas, and the air which has been passed over the sensor is removed from the circuit 10. After a short time, the sensor will come back to its non-adsorption state (or to a threshold state near to zero adsorption) and be ready for the next test. These additional elements and devices are not shown in FIG. 1.

FIG. 2 shows the schema of an installation according to the invention for the detection and the quantitative analysis of one or more volatile low molecular compounds contained in a gaseous environment, typically air. This installation comprises a system of gas conduits 40 that form a closed circuit. This circuit contains successively a volumetric pump 42, a calibration gas metering and introducing device 44, a calixarenic sensor 46, and a three-way cock 48. A valve 50 connects the circuit 40 to a vacuum pump V, and another valve 52 allows to open the circuit 40 to the free atmosphere A.

The free, third connection of the three-way cock 48 is connected to a second three-way cock 54 whose two free outputs are connected, respectively, via a valve 58 to a sampling port 56, and via a stop valve 60 to a rinsing and reactivating gas reservoir 62. A filter device 64, optionally to be heated or to be cooled, may be inserted between the sampling port 56 and the valve 58. The filter 64 and the sampling port 56 may be replaced, when needed, by a removable recipient (not shown) containing a gas sample that has been taken at a distant location.

All elements of the system 40 are connected, as it is shown in a schematical manner by the arrows C, to a device 66 for controlling, adjusting and for data processing that contains all the devices and elements which are required to run the installation, preferably in an automatic mode. Furthermore, FIG. 2 shows schematically a control field 70 for entering operation parameters and a display 68. The apparatus 66 is connected to a printer 72 or another recording device. It is possible to place the apparatus 66 very distant from the remainder of the installation or to provide remote control and/or remote display via an appropriate network (not shown).

The installation may be run in the following manner. The first step is a flushing and calibrating process. In order to rinse the system, it is flushed with the aid of a very pure and dry gas supplied from the reservoir 62; in this step, the cocks 54 and 48 are turned into position 2 as shown in FIG. 2. The valve 52 is slightly opened and also the valve 60. The pump 42 is turned on, and there will be a gas flow from reservoir 62 into the circuit 40; a circulating flow is established in this circuit whereas a fraction of the flushing and calibration gas is evacuated through the valve 52. Now follows the calibration. To this end, all valves are closed, and the three-way cock 48 is turned into position 1 (see FIG. 2). After equilibration, about 2 to 3 minutes, a sample of a known volatile low molecular compound is injected into the circuit 40 through the injector device 44, the amount of the injected compound corresponding roughly to the amount of the same compound to be detected in an authentic gas sample; this approximate amount being estimated or being the result of another, former analysis. The frequency changes of the oscillating sensor 46 are followed on the display 68 and are recorded in the apparatus 66.

When the calibration described above has been finished, the circuit is flushed once again in order to desorb the volatile low molecular compound adsorbed on the sensor. The valve 52 is opened, the cocks 48 and 54 are turned in position 2, and the valve 60 is opened until the lecture on the display 68 shows that the sensor 46 is in the reactivated state (at the threshold of zero adsorption). The desorption may be accelerated when the valve 52 is closed and the valve 50 is opened and the cock 48 is turned in the 1 position. Finally, the section of the circuit between the valves 48 and 50 is flushed in turning the valve 48 for some time in the 3 position.

The analysis may now be started. The valve 50 is closed, the three-way cock 48 is turned in the 2 position, and the cock 54 is turned in the 1 position. The valves 58 and 52 are opened, the pump 42 is started, and a metered volume of gas, coming from the surrounding atmosphere through the inlet port 56 and the filter 64 or, respectively, from a sampling device connected to the inlet port 56, is passed over the sensor 46 and leaves the circuit 40 through the valve 52. Normally, it is desired to determine the complete adsorption of the volatile low molecular compound in the circuit 40. In this case, the three-way valve 48 is turned into the 1 position, the valve 52 is closed, and the gas within the circuit 40 is circulated over the sensor 46 until a steady state is shown on the display 68. All changes in the oscillator frequency of the sensor 46 are shown on the display 68, recorded in the device 66 and compared with the calibration values. The device 66 is adapted to calculate the concentration of the volatile low molecular compound and to display the values directly, for example in ng/l or µg/m³.

In order to adapt the installation to variable requirements regarding the different nature and/or concentration of the volatile low molecular compound to be detected and quantitatively analysed, it is possible to provide a removable mounting of the sensor 46 so that it may easily and quickly be replaced by another one. It is even possible to mount several sensors,-preferably already calibrated, in a revolving device, thus allowing to engage immediately the desired sensor into the circuit.

The following Tables show the results of adsorption assays. A quartz sensor has been used which was coated with layers of a calixarene having different thickness; the results have been obtained in the installation of FIG. 1. In the Tables, A signifies the active surface area of the sensor that is always the same. The volatile low molecular compound was diethylamine, injected in portions into air up to a final concentration of 720 ppm.

**Table I**

| p-*tert*-butylcalix[4]arene | | | |
|---|---|---|---|
| Coating thickness, nm | Initial response, ng/A | Maximum response, ng/A | Time for reaching the maximum, sec |
| 25 | 28 | 60 | 1000 |
| 50 | 15 | 35 | 1600 |
| 75 | 32 | 55 | 1600 |
| 100 | 8 | 17 | 650 |
| 125 | 4 | 10 | 1500 |
| 150 | 15 | 25 | 3500 |

**Table II**

| p-*tert*-butylcalix[6]arene | | | |
|---|---|---|---|
| Coating thickness, nm | Initial response, ng/A | Maximum response, ng/A | Time for reaching the maximum, sec |
| 25 | 9 | 53 | 1000 |
| 50 | 18 | 105 | 800 |
| 75 | 18 | 85 | 900 |
| 100 | 10 | 55 | 1500 |
| 125 | 7 | 38.5 | 2200 |
| 150 | 6 | 21.5 | 3500 |

**Table III**

| p-*tert*-butylcalix[8]arene | | | |
|---|---|---|---|
| Coating thickness, nm | Initial response, ng/A | Maximum response, ng/A | Time for reaching the maximum, sec |
| 25 | 8 | 20.5 | |
| 50 | 8 | 25 | |
| 75 | 12 | 21.5 | |
| 100 | 20 | 48.5 | 1200 |
| 125 | 21 | 27.5 | |
| 150 | 10 | 23 | |

**Table IV**

| Calix [4] arene | | | |
|---|---|---|---|
| Coating thickness, nm | Initial response, ng/A | Maximum response, ng/A | Time for reaching the maximum, sec |
| 25 | 8 | 35 | |
| 50 | 40 | 120 | |
| 75 | 15 | 83 | |
| 100 | 3 | 34,5 | 4800 |
| 125 | 7 | 69 | |
| 150 | 5 | 45 | |

**Table V**

| Calix [8] arene | | | |
|---|---|---|---|
| Coating thickness, nm | Initial response, ng/A | Maximum response, ng/A | Time for reaching the maximum, sec |
| 25 | 24 | 51 | |
| 50 | 20 | 75 | |
| 75 | 45 | 168 | |
| 100 | 38 | 170 | 8000 |
| 125 | 40 | 228 | |
| 150 | 20 | 78 | |

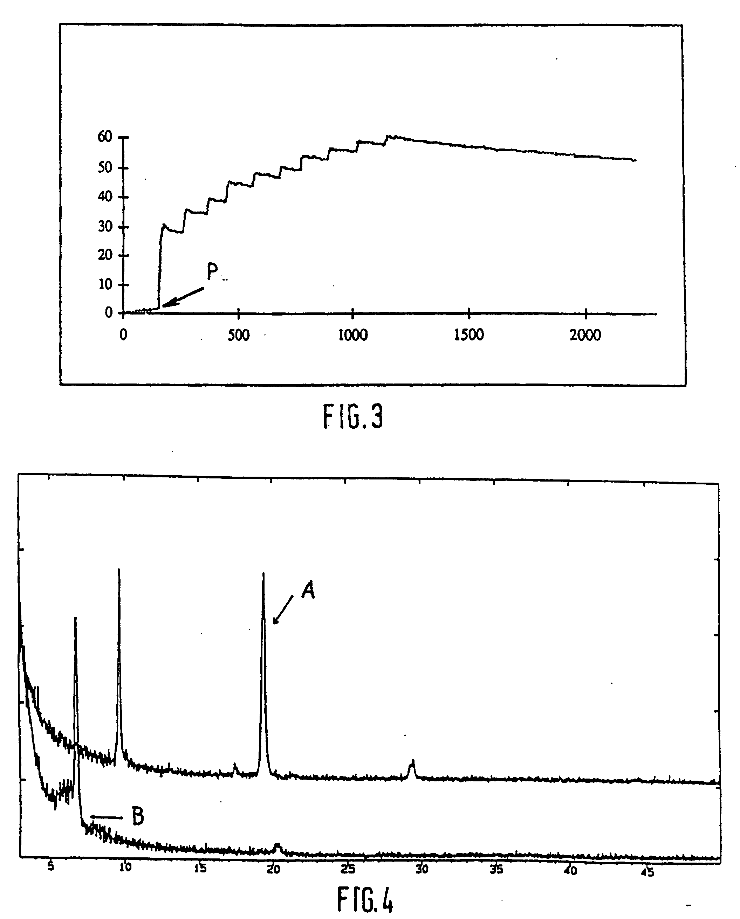

FIG. 3 shows a diagram wherein the amount of diethylamine in ng per surface area A of the sensor (which has not been determined) is plotted on the ordinate and the analysis time duration in seconds on the abscissa. The diagram of FIG. 3 is based on the first assay compiled in the above Table I. The analysis was made at ambient temperature and pressure. The diethylamine was injected into the air circuit as 10 successive portions corresponding to 72.6 ppm each. The first injection, made after 200 sec from the beginning, indicated by the arrow P, resulted in a rise to 28 ng/A, and the maximum of 60 ng/A was reached 1000 sec later on.

A problem for which no solution whatsoever has until now be given in the prior art is how the sensitivity of the sensor could be adapted to the concentration of the volatile low molecular compound in the gaseous environment. Theoretically, one could think to vary the thickness of the thin layer of calixarene on the sensor. A thicker layer diminishes the sensitivity because the sensor will adsorb a greater amount of the calixarene before it is saturated. However, such a measure would result in an unacceptably long time duration of the analysis and/or a too small amount of volatile compound adsorbed compared with the first adsorption, see the above Table.

On the other hand, another theoretic solution of the above depicted problem would be to use calixarenes having a greater number of annular members, such as calix[10]arene or even higher calixarenes. Although this possibility is part of the present invention, it should be taken into account that the volatile low molecular compound may be insufficiently adsorbed, and the precision of the analyse is impaired due to the greater volume of the molecular cavities of these calixarenes. As a whole, the present invention suggests the use of any calixarene whatsoever, for example calix[4]arene, calix[6]arene, calix[8]arene, of dioxahomocalixarenes and of resorcinolcalixarenes, these compounds being substituted or not.

The sensors that are used in the process of the invention are prepared by applying a thin layer onto an appropriate support, preferably a quartz crystal, par example by the techniques of evaporation under vacuum, dip coating, spin coating, etc. At present, the evaporation method since it allows to obtain very thin and very pure layers. However, it has been found that it is extremely difficult or even impossible to obtain identical sensors: Either the thickness of the layers is different from one specimen to another, or the crystals in the thin layer have different polymorphological properties. Therefore, the sensitivity range of the sensor which has been prepared is not known beforehand.

Still according to this invention, it has surprisingly been found that a heat treatment of the sensor just prepared changes the morphology of the calixarene crystals and results in a distinct and well defined form of the crystalline organisation. The only disadvantage of this heat treatment is a slight decrease in sensitivity but this fact should not be overestimated, the more as neither the response speed nor the precision and reproducibility of the adsorption are impaired. Furthermore, it has been found that the reversibility of the sensor is increased. This is to say that, during the above described reactivation by means of an flushing air stream or of a vacuum, the "free running" oscillation frequency of the sensor and thus its initial state are always returned to the same starting threshold. The reproducibility of the adsorption results is also found to be improved.

This heat treatment is carried out by heating the sensor which has been obtained by the deposit of one or more calixarenes, to a temperature in the range of from about 80 °C to about 120 °C during 20 to 120 minutes under a molecular vacuum. FIG. 4 shows an X-ray diffraction spectrum of p-*tert* butylcalix[4]arene on the surface of a sensor before and after the heat treatment (1 hour at 100 °C). It can be seen that the initial deposit (curve A) has two peaks at 10 and 19 nm whereas the heat treated deposit (curve B) shows only one peak at 7 nm. The crystal morphology of the initial deposit has thus changed and yielded a unique and well defined new morphology. Other heat treatments, for example at other temperatures and/or during other time durations yield other changes of the crystal morphology and, thus, other sensitivities.

The invention is therefore further related to a sensor capable of being used in a device for detecting and quantitatively analysing volatile low molecular compounds contained in a gaseous environment, said sensor comprising a thin layer of at least one calixarene, resorcinolcalixarene or dihomooxacalixarene, said calixarenes being substituted or not, deposited on a support whose physical properties undergo a reversible change when said volatile low molecular compounds are adsorbed, wherein the sensor has undergone a heat treatment in order to uniform and equalise the morphology of the thin layer.

In these sensors as well in the others described herein, the thin calixarene layer is directly applied to the surface of the support but the invention also comprises sensors wherein said layer is deposited on a specially treated support surface, for example crystal surfaces coated with thin layers of a metal such as silver or gold, or of any other material necessary or desired to confer special or enhanced properties to the sensor.

The new unique and well defined morphology of the thin calixarene coating has been confirmed by X-ray diffraction spectra made with glancing incidence. The calixarene crystals on the new, heat treated sensors form crystalline blocks of 10 to 15 µm long and 6 to 7 µm large, further containing still smaller crystals having a size of about 500 x 130 nm.

The polymorphism as obtained plays a roll in the response of the sensors and modulate the interactions between the calixarenes, organised in thin layers, and the captured volatile molecules. This new property of the calixarene deposits can be created in all other cases where calixarenes in thin layers are used.

## Claims

1. Process for the detection and the quantitative analysis of volatile low molecular compounds, contained in low concentration in a gaseous medium, wherein a sensor is used comprising a sensitive thin layer containing at least one calixarene, disposed on a support capable of generating a signal in response to the nature and/or the amount of said volatile low molecular compound adsorbed by said thin layer, and the generated signal is processed in order to determine the nature and/or the amount of said adsorbed compound, **characterised in that** said sensor is contacted with a continuous stream of said gaseous medium, and that said sensitive thin layer of the sensor has been heat treated just after the preparation of the sensor in order to confer to this layer a distinct and well defined form of crystalline organisation.

2. Process according to claim 1, wherein said volatile low molecular compound contained in said gaseous medium is ionisable.

3. Process according to claim 1, wherein said gaseous medium is air.

4. Process according to claim 1, wherein said continuous gas stream is contacted with said sensor at essentially normal temperature and atmospheric pressure.

5. Process according to claim 1, wherein a sensor is used comprising a thin layer of a calixarene on a quartz crystal support, and the changes of the oscillation frequency of the crystal in response to adsorbed volatile low molecular compound are measured and processed.

6. Process according to claim 1, wherein the thickness of said thin layer is comprised between 20 and 500 nm.

7. Process according to claim 6, wherein the thickness of said thin layer is comprised between 25 and 150 nm.

8. Process according to claim 1, wherein a sensor is used comprising a heat treated thin layer of a calix[4]-arene, a calix[6]arene, a calix[8]arene, a dioxahomocalixarene or a resorcinolcalixarene, these compounds being unsubstituted or substituted.

9. Process according to claim 1, wherein a calibration of the system used for the process is carried out prior to analysis, using a standard gas containing a known and predetermined amount of a volatile low molecular compound.

10. Process according to claim 9, wherein said calibration is carried out by the injection of a measured amount of a known volatile low molecular compound into a gaseous medium which is circulated over said sensor.

11. Process according to claim 1, wherein the sensor is regenerated after an analysis by passing a gas free from volatile low molecular compounds over the thin layer on said sensor, or said sensor is subjected to a vacuum.

12. Installation for the detection and the quantitative analysis of volatile low molecular compounds, contained in low concentration in a gaseous medium, comprising a closed tubular circuit (10; 40) containing a volumetric pump (18; 42), at least one sensor (20; 46) for the volatile low molecular compound(s), a feeding device (28; 64) for the gaseous medium to be analysed, and means (26; 66) for controlling, adjusting and for processing the data supplied by said sensor, **characterised in that** the said sensor (20; 46) comprises a sensitive thin layer containing at least one calixarene, disposed on a support capable of generating a signal in response to the nature and/or the amount of said volatile low molecular compound adsorbed by said thin layer, said sensor having been heat treated just after its preparation in order to uniform the crystal morphology of said calixarene in the thin layer.

13. Installation according to claim 12, further comprising means (44) for the metered supply of a calibration gas, connected to said circuit (40) upstream said sensor (46).

14. Installation according to claim 12, further comprising a reservoir (62) for a reactivation gas.

15. Sensor for the use in an installation for detecting and quantitatively analysing at least one volatile low molecular compound contained in a gaseous medium, comprising a thin layer of at least one calixarene, a resorcinolcalixarene or a dioxahomocalixarene, these calixarenes being non substituted or substituted, disposed on a support whose physical properties undergo a reversible change when said volatile low molecular compound is adsorbed on said calixarene, said sensor having been heat treated just after its preparation in order to uniform the crystal morphology of said calixarene in the thin layer.

16. Process for the preparation of a sensor according to claim 15, wherein a support whose physical properties undergo a reversible change when a volatile low molecular compound is adsorbed on an absorbing layer disposed on said support, is covered by a thin layer of at least one calixarene, a resorcinol-calixarene or a dioxahomocalixarene, these calixarenes being optionally substituted, and the sensor thus prepared is submitted to a heat treatment.

17. Process according to claim 16, wherein said heat treatment is effected at a temperature in the range of from 80 to 120 °C during 20 to 120 minutes.

18. Process according to claim 16, wherein said thin layer is applied by the technique of evaporation under vacuum.

## Patentansprüche

1. Verfahren zur Feststellung und quantitativen Analyse von flüchtigen niedermolekularen Verbindungen, die in niedriger Konzentration in einem gasförmigen Medium enthalten sind, bei dem ein Fühler mit einer empfindlichen dünnen Schicht verwendet wird, die mindestens ein Calixaren enthält und auf einem Träger angeordnet ist, der dazu befähigt ist, ein Signal bezüglich der Art und/oder der Menge an genannter flüchtiger niedermolekularer Verbindung, die von der genannten dünnen Schicht absorbiert ist, zu erzeugen, und wobei das erzeugte Signal zur Bestimmung der Art und/oder der Menge an genannter absorbierter Verbindung weiterverarbeitet wird, **dadurch gekennzeichnet, dass** der genannte Fühler mit einem kontinierlichen Strom des genannten gasförmigen Mediums in Berührung gebracht wird, und dass die genannte empfindliche Schicht des Fühlers gleich nach der Herstellung des Fühlers wärmebehandelt worden ist, um dieser Schicht eine ausgeprägte und wohldefinierte Form der kristallinen Anordnung zu verleihen.

2. Verfahren nach Anspruch 1, bei dem die genannte flüchtige niedermolekulare Verbindung, die im genannten gasförmigen Medium enthalten ist, ionisierbar ist.

3. Verfahren nach Anspruch 1, bei dem das genannte gasförmige Medium Luft ist.

4. Verfahren nach Anspruch 1, bei dem der genannte kontinuierliche Gasstrom mit dem genannten Fühler bei im wesentlichen normaler Temperatur und normalem Atmosphärendruck in Berührung gebracht wird.

5. Verfahren nach Anspruch 1, bei dem ein Fühler verwendet wird, der auf einem Quarzkristallträger eine dünne Schicht eines Calixarens aufweist, und bei dem die Änderungen der Schwingfrequenz des Kristalls in Abhängigkeit von der absorbierten flüchtigen niedermolekularen Verbindung gemessen und weiterverarbeitet werden.

6. Verfahren nach Anspruch 1, bei dem die Dicke der genannten dünnen Schicht zwischen 20 und 500 nm liegt.

7. Verfahren nach Anspruch 6, bei dem die Dicke der genannten dünnen Schicht zwischen 25 und 150 nm liegt.

8. Verfahren nach Anspruch 1, bei dem ein Fühler verwendet wird, der eine wärmebehandelte dünne Schicht eines Calix[4]arens, eines Calix[6]arens, eines Calix[8]arens, eines Dioxahomocalixarens oder eines Resorcinolcalixarens aufweist, wobei diese Verbindungen unsubstituiert oder substituiert sind.

9. Verfahren nach Anspruch 1, bei dem eine Eichung des für das Verfahrens verwendeten Systems vor der Analyse vorgenommen wird, wobei ein Eichgas verwendet wird, das eine bekannte und vorbestimmte Menge einer flüchtigen niedermolekularen Verbindung enthält.

10. Verfahren nach Anspruch 9, bei dem die Eichung durch Einspritzen einer abgemessenen Menge einer bekannten flüchtigen niedermolekularen Verbindung in ein gasförmiges Medium, das über den genannten Fühler im Kreislauf geführt wird, vorgenommen wird.

11. Verfahren nach Anspruch 1, bei dem der Fühler nach einer Analyse regeneriert wird, indem ein Gas, das frei von flüchtigen niedermolekularen Verbindungen ist, über die dünne Schicht auf dem genannten Fühler geleitet oder der genannte Fühler einem Vakuum ausgesetzt wird.

12. Anlage zur Feststellung und zur quantitativen Analyse von flüchtigen niedermolekularen Verbindungen, die in niedriger Konzentration in einem gasförmigen Medium enthalten sind, mit einem geschlossenen rohrförmigen Leitungskreislauf (10; 40), enthaltend eine volumetrische Pumpe (18; 42), mindestens einen Fühler (20; 46) für die flüchtige(n) niedermolekulare(n) Verbindung(en), eine Zuführungseinrichtung (28; 64) für das zu analysierende gasförmige Medium, und Mittel (26; 66) zum Steuern, Einstellen und zur Verarbeitung der vom genannten Fühler gelieferten Daten, **dadurch gekennzeichnet, dass** der genannte Fühler (20; 46) eine empfindliche dünne Schicht aufweist, die mindestens ein Calixaren enthält und auf einem Träger angeordnet ist, der dazu befähigt ist, ein Signal bezüglich der Art und/oder der Menge an genannter flüchtiger niedermolekularer Verbindung, die von der genannten dünnen Schicht absorbiert ist, zu erzeugen, und dass der genannte Fühler gleich nach seiner Herstellung wärmebehandelt wurde, um die Kristallmorphologie des genannten Calixarens in der dünnen Schicht zu vereinheitlichen.

13. Anlage nach Anspruch 12, die zusätzlich Mittel (44) zur dosierenden Zufuhr eines Eichgases aufweist, die in Strömungsrichtung gesehen vor dem genannten Fühler (46) mit dem genannten Leitungskreislauf (40) verbunden sind.

14. Anlage nach Anspruch 12, die zusätzlich einen Vorratsbehälter (62) für ein Reaktivierungsgas aufweist.

15. Fühler zur Verwendung in einer Anlage zur Feststellung und quantitativen Analyse mindestens einer flüchtigen niedermolekularen Verbindung, die in einem gasförmigen Medium enthalten ist, mit einer dünnen Schicht mindestens eines Calixarens, eines Resorcinolcalixarens oder eines Dioxahomocalixarens, wobei diese Calixarene unsubstituiert oder substituiert sind, auf einem Träger, dessen physikalische Eigenschaften eine reversible Veränderung erleiden, wenn die genannte flüchtige niedermolekulare Verbindung auf dem genannten Calixaren adsorbiert ist, wobei der genannte Fühler gleich nach seiner Herstellung wärmebehandelt worden ist, um die Kristallmorphologie des genannten Calixarens in der dünnen Schicht zu vereinheitlichen.

16. Verfahren zur Herstellung eines Fühlers nach Anspruch 15, bei dem ein Träger, dessen physikalische Eigenschaften eine reversible Veränderung erleiden, wenn eine flüchtige niedermolekulare Verbindung an einer auf dem genannten Träger befindlichen absorbierenden Schicht adsorbiert wird, mit einer dünnen Schicht mindestens eines Calixarens, eines Resorcinolcalixarens oder eines Dioxahomocalixarens, wobei diese Calixarene gegebenenfalls substituiert sind, versehen und der so hergestellte Fühler einer Wärmebehandlung unterworfen wird.

17. Verfahren nach Anspruch 16, worin die genannte Wärmebehandlung bei einer Temperatur im Gebiet von 80°C bis 120°C während 20 bis 120 Minuten ausgeführt wird.

18. Verfahren nach Anspruch 16, bei dem die genannte dünne Schicht mittels der Technik der Vakuumverdampfung aufgebracht wird.

## Revendications

1. Procédé pour la détection et l'analyse quantitative de composés volatils à bas poids moléculaire contenus à faible concentration dans un milieu gazeux, dans lequel on utilise un détecteur comportant une couche mince sensible, renfermant au moins un calixarène et disposée sur un support apte à engendrer un signal en réponse à la nature et/ou à la concentration dudit composé volatil à bas poids moléculaire adsorbé sur ladite couche mince, le signal engendré étant traité afin de déterminer la nature et/ou la concentration dudit composé adsorbé, **caractérisé en ce que** ledit détecteur est mis en contact avec un courant continu dudit milieu gazeux, et que ladite couche mince sensible du détecteur a subi un traitement thermique juste après la fabrication du détecteur afin de conférer à cette couche une forme distincte et bien définie d'orientation cristalline.

2. Procédé selon le revendication 1, dans lequel ledit composé volatil à bas poids moléculaire présent dans ledit milieu gazeux est ionisable.

3. Procédé selon le revendication 1, dans lequel ledit milieu gazeux est l'air.

4. Procédé selon le revendication 1, dans lequel ledit courant gazeux continu est mis en contact avec ledit détecteur essentiellement à température et pression atmosphérique normales.

5. Procédé selon le revendication 1, dans lequel on utilise un détecteur comportant une couche mince d'un calixarène sur un support de cristal de quartz, et les changements de la fréquence d'oscillation du cristal en réponse au composé volatil à bas poids moléculaire adsorbé sont mesurés et traités.

6. Procédé selon le revendication 1, dans lequel l'épaisseur de ladite couche mince est comprise entre 20 et 500 µm.

7. Procédé selon le revendication 6, dans lequel l'épaisseur de ladite couche mince est comprise entre 25 et 150 µm.

8. Procédé selon le revendication 1, dans lequel on utilise un détecteur comportant une couche mince traitée à chaud d'un calix [4] arène, d'un calix [6] arène, d'un calix[8]arène, d'un dioxahomocalixarène ou d'un résorcinolcalixarène, ces composés étant substitués ou non.

9. Procédé selon le revendication 1, dans lequel on procède avant l'analyse à une étalonnage du système utilisé pour le procédé en utilisant un gaz d'étalonnage contenant une quantité connue et prédéterminée d'un composé volatil à bas poids moléculaire.

10. Procédé selon le revendication 9, dans lequel on réalise ledit étalonnage par l'injection d'une quantité dosée d'un composé volatil à bas poids moléculaire connu dans un milieu gazeux qui circule au-dessus dudit détecteur.

11. Procédé selon le revendication 1, dans lequel le détecteur est régénéré après une analyse en faisant passer un gaz exempt de composés volatils à bas poids moléculaire au-dessus de la couche mince sur ledit détecteur, ou ledit détecteur est exposé à un vide.

12. Installation pour la détection et l'analyse quantitative de composés volatils à bas poids moléculaire contenus à faible concentration dans un milieu gazeux, comprenant un circuit tubulaire fermé (10; 40) comportant une pompe volumétrique (18; 42), au moins un détecteur (20; 46) du ou des composés volatils à bas poids moléculaire, un dispositif d'introduction (28; 64) du milieu gazeux à être analysé, et des moyens (26; 66) pour contrôler, ajuster et traiter les données fournies par ledit détecteur, **caractérisée en ce que** ledit détecteur (20; 46) comporte une couche mince sensible contenant au moins un calixarène disposée sur un support apte à engendrer un signal en réponse à la nature et/ou à la concentration dudit composé volatil à bas poids moléculaire adsorbé sur ladite couche mince, ledit détecteur ayant été traité à chaud juste après sa fabrication afin d'égaliser la morphologie cristalline dudit calixarène dans la couche mince.

13. Installation selon la revendication 12, comprenant en outre des moyens (44) pour un apport dosé d'un gaz d'étalonnage, reliés audit circuit (40) en amont dudit détecteur (46).

14. Installation selon la revendication 12, comprenant en outre un réservoir (62) d'un gaz de réactivation.

15. Détecteur pour l'utilisation dans une installation pour détecter et quantitativement analyser au moins un composé volatil à bas poids moléculaire contenu dans un milieu gazeux, comprenant une couche mince d'au moins un calixarène, d'un résorcinolcalixarène ou d'un dioxahomocalixarène, ces calixarènes étant substitués ou non, disposé sur un support dont les propriétés physiques subissent un changement réversible lorsque ledit composé volatil à bas poids moléculaire est adsorbé sur ledit calixarène, ledit détecteur ayant été traité à chaud juste après sa fabrication afin d'égaliser la morphologie cristalline dudit calixarène dans la couche mince.

16. Procédé pour la préparation d'un détecteur selon la revendication 15, dans lequel un support dont les propriétés physiques subissent un changement réversible lorsqu'un composé volatil à bas poids moléculaire est adsorbé sur une couche absorbante disposée sur ledit support, est recouverte d'une couche mince d'au moins un calixarène, d'un résorcinolcalixarène ou d'un dioxahomocalixarène, ces calixarènes pouvant être substitués, et le détecteur ainsi préparé est soumis à un traitement thermique.

17. Procédé selon la revendication 16, dans lequel ledit traitement thermique est effectué à une température comprise entre 80 et 120°C pendant 20 à 120 minutes.

18. Procédé selon la revendication 16, dans lequel ladite couche mince est appliquée par la technique de la vaporisation sous vide.
